# EUROPEAN PATENT SPECIFICATION

(11) **EP 1 601 844 B1**
(45) Date of publication and mention of the grant of the patent: **29.12.2010**
(21) Application number: 04714059.5
(22) Date of filing: 24.02.2004
(51) Int. Cl.: E04F 15/04

(54) **FLOORBOARD AND METHOD OF MANUFACTURING THEREOF**
DIELEN UND VERFAHREN ZU DEREN HERSTELLUNG
LAME DE PARQUET ET PROCEDE DE FABRICATION ASSOCIE

(30) Priority: 24.02.2003 SE 0300479; 29.10.2003 SE 0302865
(43) Date of publication of application: 07.12.2005
(73) Proprietor: Välinge Innovation AB, 260 40 Viken (SE)
(72) Inventor: PERVAN, Darko, S-260 40 Viken (SE)
(74) Representative: Åkesson, Sten Jan-Åke
(86) International application number: PCT/SE2004/000243
(87) International publication number: WO 2004/074597

(56) References cited:
- WO-A1-03/089736
- DE-A- 4 020 682
- US-A- 4 242 390
- US-A- 4 489 115
- US-A1- 2003 033 777

## Description

### Technical Field

The invention relates generally to the technical field of floorboards. The invention concerns floorboards with a sound-absorbing surface of fibers which can be joined mechanically in different patterns. The invention also concerns methods for manufacturing such floorboards. The invention is particularly suited for use in floating floors.

### Field of Application

The present invention is particularly suited for use in floating floors with mechanical joint systems. Such floors often consist of a surface layer of laminate or wood, a core and a balancing layer and are formed as rectangular floorboards intended to be joined mechanically, i.e. without glue, along both long sides and short sides in the vertical and horizontal direction.

The following description of prior-art technique, problems of known systems, as well as the object and features of the invention will therefore as non-limiting examples be aimed mainly at this field of application. However, it should be emphasized that the invention can be used in optional floorboards which have a surface layer and a core. The invention may thus also be applicable to floors that are nailed or glued to a base.

### Background of the Invention

Floating floors with mechanical joint systems and with a surface of laminate or wood have in recent years taken large shares of the market from, for instance, carpets and plastic flooring but also from wooden flooring that is glued to the base. One reason is that these floors can be laid quickly and easily on a subfloor that does not have to be perfectly smooth or flat. They can move freely from the subfloor. Shrinkage and swelling occur under the baseboards and the joints between the floorboards are tight. A floating floor with a mechanical joint system can easily be taken up and laid once more. Individual floorboards can be replaced, the subfloor is accessible for renovation and the entire floor can be moved to a different room.

Plastic floors and textile floor coverings that are glued to the subfloor require a perfectly flat subfloor. Laying is complicated and the flooring cannot be removed without being damaged. Such floorings are advantageous since they can be supplied in widths of for instance 4 m. There are few joints. Plastic floorings are impermeable to water, and both plastic flooring and textile flooring are soft and produce a lower sound level than laminates and wooden floors.

Thus, floating floors have many advantages over floors that are glued to the subfloor. A great drawback of such floating floors with a hard surface of wood or laminate is, however, that they produce a high sound level with people walking on the floor. The sound level can be annoying especially in public places, such as offices, hotels and business premises where there are many people walking around. It would be possible to use floating floors to a greater extent if the sound level could be reduced.

### Definition of some Terms

In the following text, the visible surface of the installed floorboard is called "**front side**", while the opposite side of the floorboard, facing the subfloor, is called "**rear side**". The sheet-shaped starting material that is used in manufacture is called "**core**". When the core is coated with a surface layer closest to the front side and preferably also a balancing layer closest to the rear side, it forms a semi-manufacture which is called "**floor panel**" or "**floor element**" in the case where the semi-manufacture, in a subsequent operation, is divided into a plurality of floor panels mentioned above. When the floor panels are machined along their edges so as to obtain their final shape with the joint system, they are called "**floorboards**". By "**surface layer**s" are meant all layers applied to the core closest to the front side and covering preferably the entire front side of the floorboard. By "**decorative surface layer**" is meant a layer which is essentially intended to give the floor its decorative appearance. "**Wear layer**" relates to a layer which is mainly adapted to improve the durability of the front side. By "**laminate flooring**" is meant flooring that is available on the market under this designation. The wear layer of the laminate flooring consists as a rule of a transparent sheet of paper which is impregnated with melamine resin, with aluminum oxide added. The decorative layer consists of a melamine impregnated decorative sheet of paper. The core is as a rule a wood-fiber-based sheet. By "**HDF**" is meant sheet material that is known on the market under the designation high density fiberboard, HDF, consisting of ground wood fibers joined by a binder. When a HDF sheet is manufactured with a lower density, it is called MDF (Medium Density Fiberboard).

The outer parts of the floorboard at the edge of the floorboard between the front side and the rear side are called "**joint edge**". As a rule, the joint edge has several "**joint surfaces**" which can be vertical, horizontal, angled, rounded, beveled etc. These joint surfaces exist on different materials, for instance laminate, fiberboard, wood, plastic, metal (especially aluminum) or sealing material. By "**joint**" or "**locking system**" are meant coacting connecting means which connect the floorboards vertically and/or horizontally. By "**mechanical locking system**" is meant that joining can take place without glue horizontally parallel to the surface and vertically perpendicular to the surface. Mechanical joint systems can in many cases also be joined by means of glue. By "**floating floor**" is meant flooring with floorboards which are only joined with their respective joint edges and thus not glued to the subfloor. In case of movement due to moisture, the joint remains tight. Movement due to moisture takes place in the outer areas of the floor along the walls hidden under the baseboards. By "**textile floor**" is meant a soft flooring which consists of oil-based synthetic fibers or natural fibers joined to form a carpet or felt. The flooring is usually produced in a width of about 4 m and a length that can be several hundred meters. The flooring is delivered from the factory usually in rolls and is usually installed by gluing to a subfloor. By "**needle felt**" is meant a fiber-based felt which is sold on the market under the designation needle felt carpet. This floor consists of oil-based fibers of e.g. polypropylene (PP), nylon (PA) or polyester (PES) which are joined to form a felt. Joining takes place by a fiber mat being punched by means of hooked needles. The rear side is usually coated with foam which may consist of latex and chalk.

### Prior-Art Technique and Problems thereof

To facilitate the understanding and the description of the present invention as well as the knowledge of the problems behind the invention, a description of prior-art technique now follows. Floorboards which in the following are referred to as rectangular with long sides and short sides can also be square.

Hard floorings with a surface of laminate or wood cause a high sound level. The high sound level arises mainly as people walk on the hard laminate or wood surface. The sound that is produced at the surface causes a high sound level in the room. The sound also penetrates the floor and into the beams and joists. To solve this problem, floating floors have been installed on a base of cardboard, felt, foam or like materials. The reduction of sound thus occurs on the rear side of the floorboard by means of special underlay materials that are applied between the floating flooring and the subfloor see for example US 2003 0033777 A1. This can cause a considerable dampening of the sound level between two floor levels. The reduction of sound that can be achieved in the room is of a limited extent.

Another method of reducing the sound level is to glue the floorboards to the subfloor. This results in a certain reduction of sound in the room, and the sound frequency is felt to be more pleasant. The costs are high and the laying quality is poor, with many and large joint gaps. A third method is to provide the surface of the floorboard with a surface layer of e.g. cork. This material is softer than wood and laminate and reduces the sound level. A cork floor, however, suffers from a number of drawbacks. Durability and impression strength are relatively low, cost is high and sound reduction may be insufficient.

### Summary of the Invention

An object of the present invention is to provide floorboards which can be joined mechanically to form a floating flooring with a low sound level. Such a flooring should at the same time have an attractive appearance and allow manufacture with great accuracy.

The invention is based on a first understanding that a low sound level should above all be provided using a surface layer which does not produce a high sound level when being hit with hard materials on its surface.

The invention is based on a second understanding that floorboards with a soft surface layer having a low density have a lower sound level than floorboards with surface layers that are hard and have a high density.

The invention is based on a third understanding that it is possible to provide a surface layer at a low cost, which is sound absorbing and has high durability and impact strength. Such a surface layer should consist of fibers that are flexible and which can be compressed when the floor is subjected to a load, for instance with people walking on its surface. These fibers can be made of materials having a relatively high density and being very strong, for instance synthetic fibers or natural fibers such as wool. When the fibers are thin and joined to form a felt or a carpet with air between the flexible fibers, a surface layer is produced with is soft and has low density. The thickness of the fibers may be, for instance, 0.05-0.10 mm. The volume density of the surface layer can be below 400 kg/m³, and it can preferably have a density of 150-300 kg/m². This is considerably lower than wood, laminate and cork and the sound level is significantly lower than for all these materials.

The invention is based on a fourth and highly surprising understanding that a fiber-based surface layer with low density, for instance in the form of a needle felt mat, can be applied by, for instance, gluing to a core of e.g. fiberboard. The core can be, for instance, a particle board, MDF or HDF. This floor element can, for instance, by sawing be divided into floor panels which are machined using, for instance, a combination of rotary knives and diamond tools so that they form floorboards in a floating floor. The upper joint edges can be formed in such a manner that, at the surface, they consist mainly of free fibers and closest to the core, fibers joined to the core. The surface layer can then be manufactured with great accuracy and without loose fibers. The fibers closest to the core can be joined by mixing with a flexible material, such as latex. This gives the surface layer better stability and facilitates cleaning since dirt cannot penetrate into the lower parts of the surface layer. Thin surface layer will be easier to handle if they are integrated with a core.

The invention is based on a fifth understanding that these floorboards can be joined by means of a mechanical joint system which on the one hand positions the floorboards with great accuracy relative to each other and which at the same time holds upper joint edges in close contact. The joints between the floorboards will be very tight and they can be made essentially invisible to the eye.

The invention is based on a sixth understanding that a floating floor with a fiber surface can be installed quickly and rationally and at a cost that does not have to exceed the cost of putty-coating of subfloors and gluing and cutting of a textile floor covering. Attractive patterns can be provided, for instance, by floorboards with different formats and different colors of the surface layer being joined to each other with an exact fit. Attractive patterns can be created, for instance with a surface of needle felt which normally does not allow very great variation in pattern. Thin fiber layers, for instance 1-2 mm, which are integrated with a smooth core, can provide a perfectly smooth floor. For instance, when a needle felt carpet is glued to a fiberboard, the surface will be highly stable as to shape. This facilitates, for example, printing of advanced patterns on the fiber surface. Durability increases if the surface is flat without rises.

The invention is based on a seventh understanding that a floating floor with a sound-absorbing fiber surface and a mechanical joint system is easy to take up. Such a floor is particularly convenient for temporary exhibitions, business premises and the like, in which the floor is changed frequently, and in premises subjected to great wear. Floorboards in connection with, for example, entrance portions, in which wear and soiling is great, can easily be exchanged.

Finally, the invention is based on an eighth understanding that floors with different surface layers can be provided with mechanical joint systems so as to be joinable to each other. In this way, combination floors can be provided which, for instance, consist of laminate floor and needle felt floor. If the floorboards have a similar thickness, the floor will be smooth. In walking areas, such a floor can have a surface of needle felt in order to dampen the sound level. The other surfaces may consist of, for instance, floorboards with a surface of laminate, linoleum, wood or plastic. These surfaces are easy to clean, and suitable combinations of materials can provide an attractive design.

The above thus means that according to the invention it is possible to provide a floor having all the advantages of a floating laminate or wooden floor while at the same time one of the major drawbacks can be eliminated by means of a surface layer of fibers that does not generate a high sound level.

This object is achieved wholly or partly by floorboards and a method for manufacturing that are evident from the independent claims. The dependent claims define particularly preferred embodiments of the invention.

According to a first aspect, the present invention comprises a method for manufacture of floor-boards as in claim 1. According to this method, a surface layer consisting subtantially of flexible and resilient fibers are joined to a core in order to form a floor element. Joining can occur, for example, by gluing, and the core may consist of a wood-fiber-based material such as HDF, MDF, particle board, plywood etc. This floor element is then sawn up and machined to a floorboard using a rotary tool. This means that the manufacturing technique is characterized in that the surface layer is formed by machining in connection with the finishing of the joint edges of the floor panel.

According to a second aspect, the present invention comprises floorboards for making a floating flooring as in claim 13. The floorboards are mechanically lockable and which along their edge portions have pairs of opposing connecting means for locking of adjoining floorboards to each other both vertically and/or horizontally (D1 and D2 respectively), wherein the surface layer of the floorboards consists substantially of flexible and resilient fibers.

In this context, the term "consists of" should be interpreted as "consisting substantially of", taking into account that the surface layer, in addition to the fibers, may also comprise e.g. fiber binders, backing layers, fiber treatment agents (for repelling dirt, flame retardants etc.) or matter resulting from printing of the surface.

According to a preferred embodiment of this first aspect, the floorboards can be provided with a surface layer which consists of needle felt with a density below 400 kg/m³.

Several variants of the invention are feasible. The floorboards can be provided with any prior-art mechanical joint system. Examples of prior-art mechanical joint systems are provided in WO94/26999 WO97/47834, WO99/66151, WO99/66152, FR-2 810 060, WO02/055809, WO02/055810 and WO03/083234. Such floorboards can be laid by different combinations of angling, horizontal snapping-in, vertical snapping-in or folding and insertion along the joint edge. The floorboards can also have mirror-inverted joint systems that allow joining of long side to short side or optional sides if the boards are square.

The invention will now be described in more detail with reference to the accompanying schematic drawings which by way of example illustrate currently preferred embodiments of the invention according to its various aspects.

### Brief Description of the drawings

Figs 1a-d illustrate manufacture of a floorboard according to the invention.
Figs 2a-d show examples of mechanical joint systems which can be used in the invention.
Figs 3a-c show an embodiment of the invention.
Figs 4a-f illustrate the manufacture of the joint edge portion according to the invention.
Figs 5a-c show a flow consisting of floorboards with different surface layers according to the invention.
Figs 6a-d show examples of floors according to the invention.
Figs 7a-e show examples off floors and locking systems according to the invention.

### Description of Preferred Embodiments

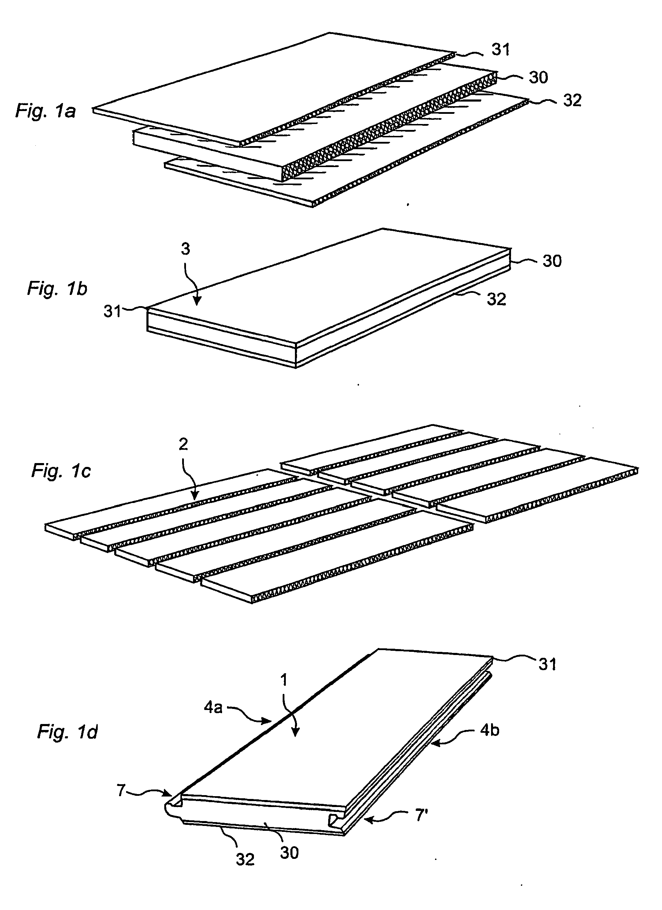

Figs 1a-d illustrate the manufacture of a floorboard according to the invention. A layer 31, which in this embodiment consists of needle felt, is joined, for instance, by gluing to a core 30. This core may consist of, for example, particle board, fiberboard, such as MDF, HDF, plywood or the like. A lower layer, for instance a balancing layer 32, can be applied to the rear side to prevent cupping. This rear layer can also be a soft material, such as foam, needle felt, cardboard or the like, which levels irregularities in the subfloor and which improves the reduction of sound. This lower layer is in some applications not necessary. The floor element 3, which may have a thickness of e.g. 5-20 mm, is then divided into a plurality of floor panels 2. These panels are then machined and joint edge portions are formed so as to constitute a mechanical joint system 7, 7'. An example of such a joint system on the long sides 4a and 4b is shown in Fig. 1d. The floorboards could be produced in several alternative ways. For example the surface layer 31 and/or the balancing layer 32 could be applied on the core of the floor panels and not on the core of the floor elements.

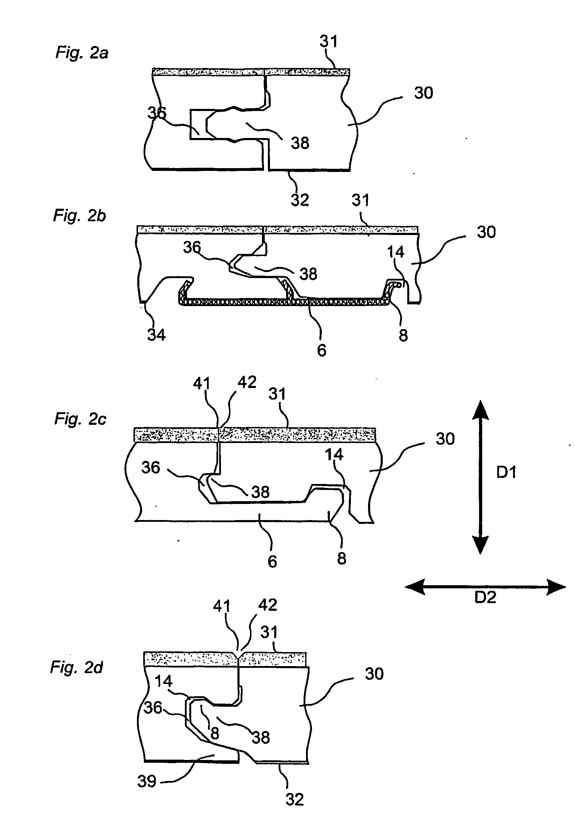

Figs 2a-d show examples of mechanical joint systems which can be used in the invention. The joint system according to Fig. 2a can be joined by vertical snapping-in. In the joint system according to Figs 2b and 2c, a groove 36 and a tongue 38 form the vertical joint D1. A strip 6, a locking element 8 and a locking groove 14 form the horizontal joint D2. These locking systems can be joined by angling and horizontal snapping-in. If upper joint edges 41, 42 are compressible, the joint system in Fig. 2c can be locked by vertical snapping-in. If the tongue 32 is removed, the locking could be accomplished with vertical folding without any snapping. A surface layer 31, which consists of e.g. needle felt, can be pressed together, and this facilitates vertical snapping-in. Fig. 2d shows a different embodiment which can be joined by angling and snapping-in. Upper joint edges 41, 42 have in this embodiment a beveled portion.

In one embodiment, the floorboard, on a first pair of opposing joint edges, is provided with a mechanical locking system adapted for locking the floorboard to an adjoining floorboard both vertically D1 and horizontally D2. This first pair of opposing joint edges may be the floorboard's long edges. A second pair of opposing joint edges may be provided with a mechanical locking adapted for locking the floorboard to an adjoining floorboard vertically and/or horizontally. This second pair of opposing joint edges may be the floorboard's short edges.

In one embodiment, the second pair of opposing joint edges are provided with a mechanical locking system which only provides locking in the vertical direction, such as is the case with a prior-art tongue-and-groove system.

In another embodiment, the second pair of opposing joint edges are provided with a mechanical locking system which only provides locking in the horizontal direction, such as would be the case if the tongue 38 of any one of the embodiments of Figs 2b or 2c was to be removed, while leaving the locking strip 6 with its locking element 8 and the locking groove 14. In fig 2d such a case would be accomplished if the tongue 38 or the lower lip 39 will be removed.

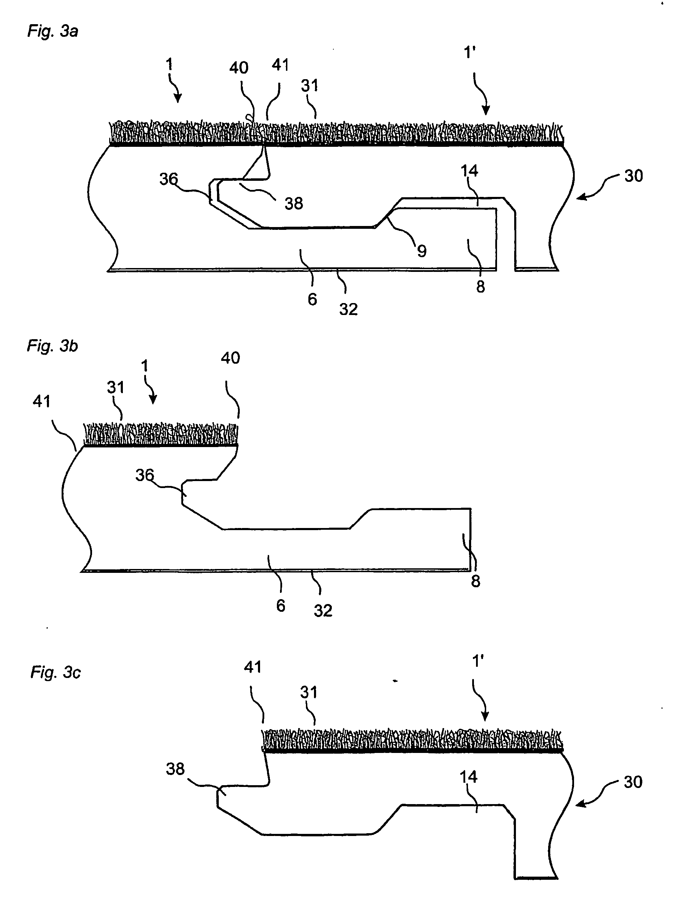

Figs 3a-c illustrate a floorboard which in this embodiment has a core 30 of a relatively soft material, such as MDF or particle board. The locking system has been adjusted to the soft core by the locking element 8 having a horizontal extent which is about 0.5 times the thickness of the core 30. The surface layer 31 has outer joint edges 40, 41 which in this embodiment project beyond the outer parts of the core 30. This projection can be some tenths of a millimeter. The outer parts of the surface layer are pressed together in connection with laying, and the floorboards will have very tight joints. The mechanical locking system guides the floorboards in exact positions and ensures a high quality of laying. In one embodiment the locking system may have a geometry where a play may exist, between the locking surface 9 of the locking element 8 and the locking groove 14,when the floorboards 1 and 1' are pressed together. The core 31 can have a thickness of e.g. 6-7 mm, and the surface layer 31 can have a thickness of 1-2 mm. In this embodiment, the total thickness of the floorboard can thus be about 7-9 mm, and the floor can then be joined to ordinary laminate floors having a thickness of about 7-8 mm. Other thicknesses can also be used in this invention.

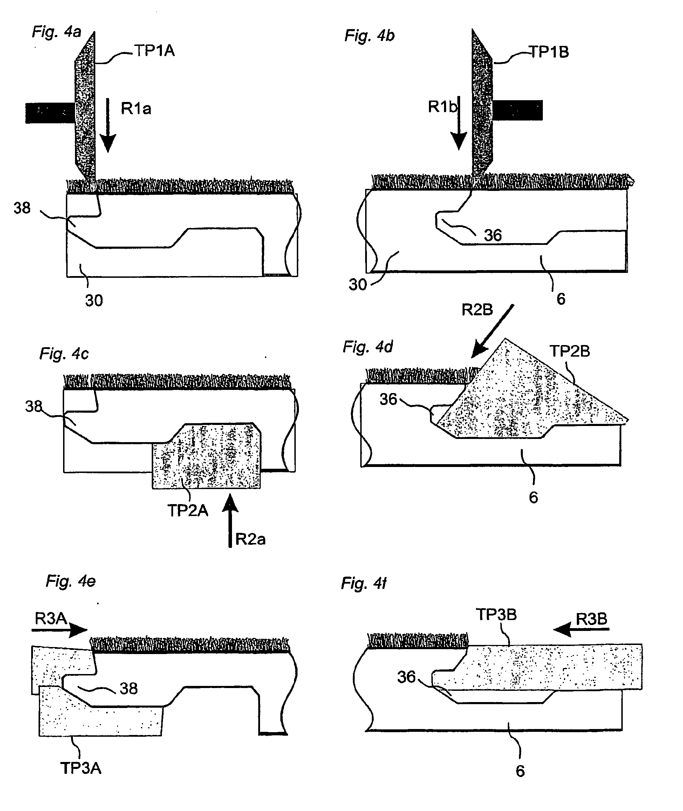

Figs 4a-4f illustrate how joint edge portions can be machined. We have discovered that a soft surface layer of fibers cannot be machined accurately by means of cutting rotary tools which are normally used in manufacture of laminates and wooden floors and the wood-based core materials that are the most common ones in these cases. Loose fibers, especially in corner portions, cause a frayed joint edge. Plastics that are used in manufacture of synthetic fibers have as a rule a melting point round 120-160 degrees C. The fibers melt at high machining speeds. These problems can be solved by the surface layer being cut using, for instance, knives. These knives TP1A and TP1B can be rotary. The angle of action of the knives is indicated by the arrows R1a and R1b in Figs 4a, 4b. The knives, which can have other angles than the 90 degrees as shown, cut against the core 30, and in this embodiment the cut is placed outside the upper and outer part of the core in the completed floorboard. Figs 4c-f show that the entire joint system can be formed using merely 4 milling tools TP2A, TP2B, TP3A and TP3B which machine the core. The joint system in the shown embodiment is made in one piece with the core. It is also possible to make the whole, or parts of, the joint system of a material other than that of the core of the floorboard. For instance the strip 6 can be made of aluminum or of a sheet-formed blank which is machined to a strip and mechanically attached to the joint edge.

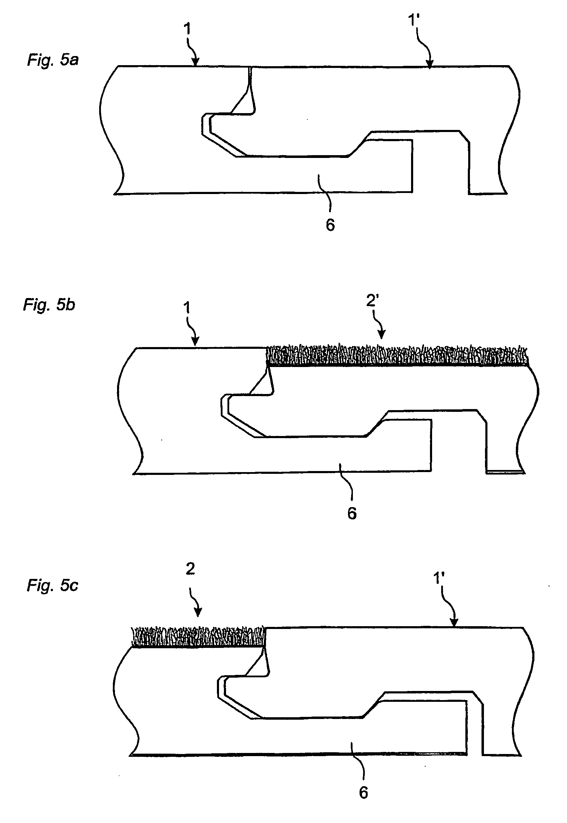

Figs 5a-c show floorboards with two surface layers. The floorboards 1, 1' can, for instance, have a surface layer of laminate or wood, and the floorboards 2, 2' can have a surface layer of e.g. needle felt, linoleum, plastic of some other suitable material. Also other combinations of materials may be used. Figs 5b and 5c show that joining to outer upper parts can take place, which are essentially positioned in the same plane. No transition strips are required.

In an alternative design, the fibers of the surface layer 31 may extend vertically such that the floorboard having the fiber surface layer appears slightly higher than the adjacent, "normal" floorboard. Hence, the vertical extension of the fiber surface layer may be used to provide a desired surface structure of the flooring, e.g. in order to provide the appearance of a rug being placed on a hard floor.

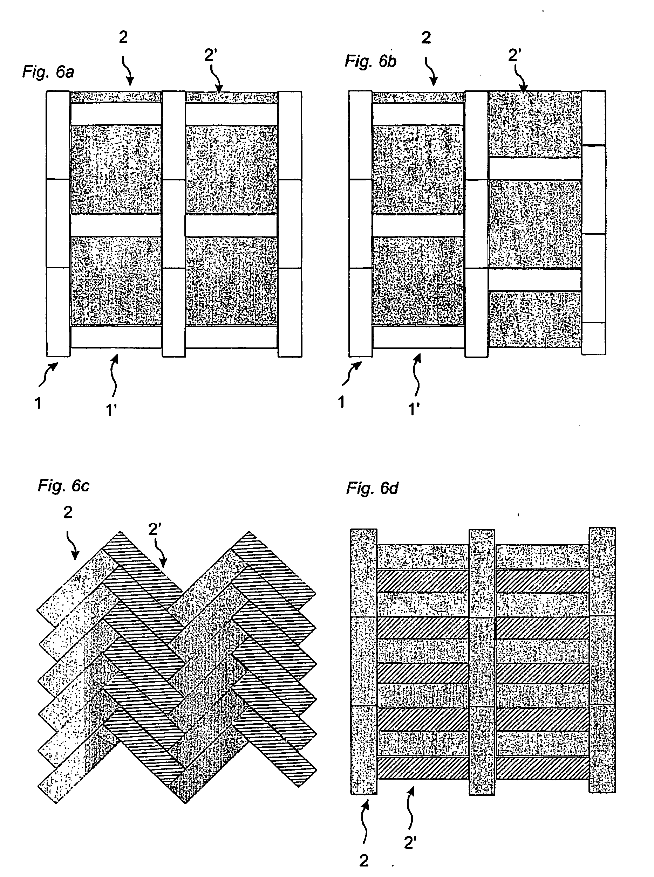

Figs 6a-6d show examples of floors that can be provided according to the invention. In Fig. 6a, the floorboards 2, 2' have a surface of needle felt. They can be square, for instance 40x40 cm. The floorboards 1, 1' can have a surface of laminate, wood, cork, linoleum, plastic etc. For example they can have a width of 10 cm and a length of 40 cm. In Fig. 6b, the squares are offset. If the harder floorboards 1, 1' are positioned at a somewhat lower level than the softer floorboards, the hard floorboards will not cause a high sound level since they will, to a limited extent, be in contact with shoes generating sound. Thus, the invention also concerns a set of floorboard with at least two different surface layers to provide a floor.

Figs 6c and 6d illustrate floors consisting of two different floorboards with surface layers of flexible fibers which differ from each other with respect to color, surface structure etc. In Fig. 6c, the floorboards are joined to form a herringbone pattern. They have mirror-inverted mechanical locking systems that allow joining of long side to short side by angling and/or snapping-in. The long sides can also be joined by angling and/or snapping-in. If the short sides of the floorboards in fig 6c have a locking system which only locks horizontally, the whole floor could be installed with angling only.

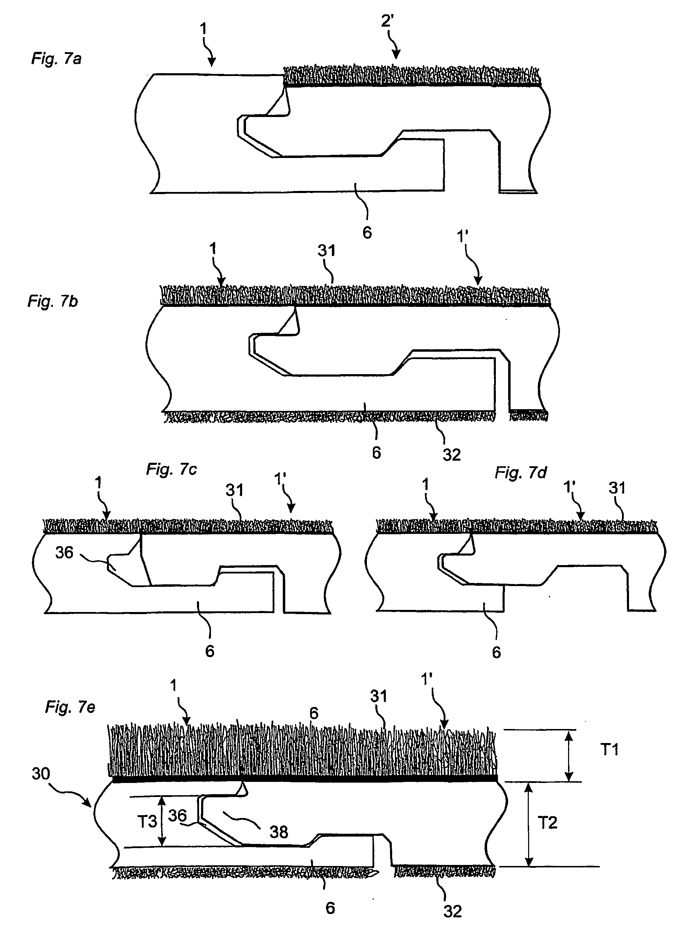

Fig 7a shows a combination floor in which one floorboard 1 has a harder surface, such as laminate, wood, linoleum, plastic etc than an other floorboard 2'. One floorboard 2' has in this embodiment a softer surface layer which is positioned higher than the harder surface layer of the other 1' floorboard. It is preferable to position the softer surface layer on the same or higher level than the harder surface layer. The advantage is the softer and more flexible layer protects the edges of the hard surface.

Fig 7b shows a floorboard with a soft fibre layer 32 on the rear side which may be used as a balancing layer.

Fig 7c shows a locking system which only locks horizontally and fig 7d shows a locking system which only locks vertically.

Fig 7e shows a floorboard where the thickness T1 of the soft surface layer 31 is equal or larger than 0,5 times the thickness T2 of the core. Such a thin core gives several advantages related to production cost, transport, installation etc. It is possible to produce a mechanical locking system by machining in a sheet material which has a thickness of 3-5 mm only. Generally diamond tools are used and in order to reach the best cost and quality levels, the tools should be as thick and compact as possible. A difficult part to produce is the groove 36. In this embodiment the grove 36 and the tongue 38 has a vertical thickness T3 which is larger or equal than 0,5 times the thickness T2 of the core 30. It is obvious that all prior-art parquet and tile patterns can be made by means of floorboards according to the invention. The sides of the floorboards need not be perpendicular. The soft surface allows that also the thickness may be varied between different floorboards.

If the core is made of a moisture-proof material, such as plastic or compact laminate, floorboards with a fiber surface resembling synthetic grass can be provided. Such floorboards can be laid immediately on the ground or on concrete, and they may, for instance, constitute tees on golf courses, balcony floors etc. During the winter, the boards can be taken up and stored under a roof.

## Claims

1. A method for manufacturing floorboards (1, 1') with a surface layer (31) and a core (30), for making a floating flooring, which floorboards are mechanically lockable and which along at least one pair of opposing edge portions have pairs of opposing connecting means for lacking adjoining floorboards to each other both vertically horizontally (D1 and/or D2 respectively), for providing a floating floor with mechanically lockable floorboards, **characterized by** the steps of
joining a surface layer (31) consisting substantially of and resilient fibers to a wood-fiber-based core (30) to form a floor element (3),
cutting the surface layer (31) of the floor element (3) at an edge of the floor element with knifes (TP1A, TE1B), and
linearly displacing the floor element (3) relative to a set of tools for machining the joint edges of the floor element, to provide at least part of the upper joint edges of the floorboard (1, 1'), whereby the set of tools machining the joint edges comprises a set of rotary milling tools (TP2A, TP2B, TP3A, TP3B).

2. The method as claimed in claim 1, wherein the knives (TP1A, TP1B) are rotary knives.

3. The method as claimed in clam 1, wherein the core of each floorboard contains wood fibers.

4. The method as in claim 1, wherein the core of, each floorboard is particle board.

5. The method as claimed in clam 1, wherein the core of each floorboard is MDF or HDF.

6. The method as claimed in claim 1, wherein the surface layer is made of needle felt.

7. The method as claimed in claim 1, wherein the surface layer comprises synthetic or natural fibers.

8. The method as claimed in claim 1, wherein fibers of the surface layer are mixed with a flexible material.

9. The method as claimed in claim 8, wherein the flexible material is latex.

10. The method as claimed in clam 1, wherein the surface layer has a volume density below 400 kg/m3.

11. The method as claimed in an of claims 1-10, wherein the floorboards are rectangular or square and that two opposite sides can be joined by inward angling, whereby upper adjoining joint edge portions are in contact with each other.

12. The method as claimed claim 1, wherein the upper adjoining joint edge portions of the floorboards are compressible and can be changed in shape in connection with joining_{.}

13. Floorboards (1,1') with a surface layer (31) and a core (30), for making a floating flooring, said surface layer consisting substantially of flexible and resilient fibers, which floorboards are mechanically lockable and which along their edge portions have pairs of opposing connecting means for locking similar, adjoining floorboards to each other both vertically and/or horizontally (D1 D2 respectively), **characterized in that** the floorboards are produced by the method according to any one of claims 1-12.

## Patentansprüche

1. Verfahren zum Herstellen von Fußbodenplatten (1, 1') mit einer Oberflächenschicht (31) und einem Kern (30) zur Herstellung eines schwimmenden Fußbodenbelages, wobei die Fußbodenplatten mechanisch verriegelbar sind und entlang wenigstens eines Paares gegenüberliegender Kantenabschnitte Paare gegenüberliegender Verbindungseinrichtungen für die Verriegelung aneinander grenzender Fußbodenplatten vertikal und/oder horizontal (D1 und/oder D2) miteinander aufweisen, um einen schwimmenden Fußboden mit mechanisch verriegelbaren Fußbodenplatten zu erzeugen, **gekennzeichnet durch** folgende Schritte:
Verbinden einer Oberflächenschicht (31), die im wesentlichen aus flexiblen und elastischen Fasern besteht, mit einem Kern (30) auf Holzfaserbasis, um ein Fußbodenelement (3) auszubilden,
Schneiden der Oberflächenschicht (31) des Fußbodenelementes (3) an einer Kante des Fußbodenelementes mit Messern (TP1A, TP1B) und
lineares Verschieben des Fußbodenelementes (3) relativ zu einem Satz von Werkzeugen zur maschinellen Bearbeitung der Verbindungskanten des Fußbodenelementes, um wenigstens einen Teil der oberen Verbindungskanten der Fußbodenplatte (1, 1') auszubilden, wobei der Satz von Werkzeugen, der die Verbindungskanten maschinell bearbeitet, einen Satz von Rotationsfräswerkzeugen (TP2A, TP2B, TP3A, TP3B) enthält.

2. Verfahren nach Anspruch 1, bei dem die Messer (TP1A, TP1B) Rotationsmesser sind.

3. Verfahren nach Anspruch 1, wobei der Kern jeder Fußbodenplatte Holzfasern enthält.

4. Verfahren nach Anspruch 1, wobei der Kern jeder Fußbodenplatte aus einer Spanplatte besteht.

5. Verfahren nach Anspruch 1, wobei der Kern jeder Fußbodenplatte aus MDF oder HDF besteht.

6. Verfahren nach Anspruch 1, wobei die Oberflächenschicht aus Nadelfilz besteht.

7. Verfahren nach Anspruch 1, wobei die Oberflächenschicht synthetische oder natürliche Fasern enthält.

8. Verfahren nach Anspruch 1, wobei die Fasern der Oberflächenschicht mit einem flexiblen Material gemischt sind.

9. Verfahren nach Anspruch 8, wobei das flexible Material Latex ist.

10. Verfahren nach Anspruch 1, wobei die Oberflächenschicht eine Volumendichte unter 400 kg/m³ hat.

11. Verfahren nach einem der Ansprüche 1 bis 10, wobei die Fußbodenplatten rechteckig oder quadratisch sind und zwei gegenüberliegende Seiten durch Einwärtsabwinkeln verbunden werden können, wobei die oberen aneinander grenzenden Verbindungskantenabschnitte einander berühren.

12. Verfahren nach Anspruch 1, bei dem die oberen aneinander grenzenden Verbindungskantenabschnitte der Fußbodenplatten komprimierbar sind und im Zuge der Verbindung in ihrer Form geändert werden können.

13. Fußbodenplatten (1, 1') mit einer Oberflächenschicht (31) und einem Kern (30) zum Herstellen eines schwimmenden Fußbodenbelages, wobei die Oberflächenschicht aus im wesentlichen flexiblen und elastischen Fasern besteht und die Fußbodenplatten mechanisch verriegelbar sind und entlang ihrer Kantenabschnitte Paare gegenüberliegender Verbindungseinrichtungen zum Verriegeln ähnlicher, aneinander grenzender Fußbodenplatten vertikal und/oder horizontal (D1 und/oder D2) miteinander aufweisen, **dadurch gekennzeichnet, dass** die Fußbodenplatten gemäß dem Verfahren nach einem der Ansprüche 1 bis 12 hergestellt sind.

## Revendications

1. Procédé de fabrication de lames de plancher (1,1') avec une couche de surface (31) et un coeur (30), pour fabriquer un plancher flottant, lesquelles lames de plancher peuvent être bloquées mécaniquement et le long desquelles au moins une paire de parties de bord opposées ont des paires de moyens de connexion opposés pour bloquer des lames de plancher voisines ensemble à la fois verticalement et/ou horizontalement (D1 et/ou D2 respectivement), pour fournir un plancher flottant avec des lames de plancher pouvant être bloquées mécaniquement, **caractérisé par** les étapes consistant à
joindre une couche de surface (31) consistant sensiblement en des fibres élastiques et flexibles à un coeur à base de fibres de bois (30) pour former un élément de plancher (3),
couper la couche de surface (31) de l'élément de plancher (3) en un bord de l'élément de plancher avec des couteaux (TP1A, TP1B), et
déplacer linéairement l'élément de plancher (3) par rapport à une série d'outils pour usiner les bords de fonction de l'élément de plancher, pour fournir au moines une partie des bords de jonction supérieurs de la lame de plancher (1, 1'), moyennant quoi la série d'outils usinant les bords de jonction comprennent une série de fraises tournantes (TP2A, TP2B, TP3A, TP3B).

2. Procédé selon la revendication 1, dans lequel les lames (TP1A, TP1B) sont des couteaux tournants.

3. Procédé selon la revendication 1, dans lequel le coeur de chaque lame de plancher contient des fibres de bois.

4. Procédé selon la revendication 1, dans lequel le coeur de chaque lame de plancher est un panneau de particules.

5. Procédé selon la revendication 1, dans lequel le coeur de chaque lame de plancher est un panneau de fibres à densité moyenne ou un panneau de fibres haute densité.

6. Procédé selon la revendication 1, dans lequel la couche de surface est faite de feutre aiguilleté.

7. Procédé selon la revendication 1, dans lequel la couche de surface comprend des fibres naturelles ou synthétiques.

8. Procédé selon la revendication 1, dans lequel des fibres des la couche de surface sont mélangées avec un matériau flexible.

9. Procédé selon la revendication 8, dans lequel le matériau flexible est du latex.

10. Procédé selon la revendication 1, dans lequel la couche de surface a une densité volumique inférieure à 400 kg/m³.

11. Procédé selon l'une quelconque des revendications 1-10, dans lequel les lames de plancher sont rectangulaires ou carrées et où deux côtés opposés peuvent être joints par une inclinaison vers l'intérieur, moyennant quoi des parties de bord de jonction supérieures voisines sont en contact ensemble.

12. Procédé selon la revendication 1, dans lequel les parties de bord de jonction supérieures voisines des lames de plancher sont compressées et peuvent être déformées en liaison avec la jonction.

13. Lames de plancher (1, 1') avec une couche de surface (31) et un coeur (30), pour fabriquer un plancher flottant, ladite couche de surface consistant sensiblement en des fibres flexibles et élastiques, lesquelles lames de plancher peuvent être bloquées mécaniquement et le long desquelles leurs parties de bord ont des paires de moyens de connexion opposés pour bloquer des lames de plancher voisines et similaires ensemble à la fois verticalement et/ou horizontalement (D1 et/ou D2 respectivement), **caractérisé en ce que** les lames de plancher sont produites par le procédé selon l'une quelconque des revendications 1-12.
